# EUROPEAN PATENT SPECIFICATION

(11) **EP 2 133 614 B1**
(45) Date of publication and mention of the grant of the patent: **05.01.2011**
(21) Application number: 08158176.1
(22) Date of filing: 13.06.2008
(51) Int. Cl.: F16L 37/088

(54) **Pipe coupling**
Rohrkupplung
Couplage de tuyaux

(43) Date of publication of application: 16.12.2009
(73) Proprietor: Desbeck N.V., 1560 Hoeilaart (BE)
(72) Inventor: Flamant, Jean-Pol, 1450 Chastre (BE); De Rijcke, Ronald, 1437 Glabais (BE)
(74) Representative: Luys, Marie-José A.H.

(56) References cited:
- GB-A- 930 890

## Description

The present invention relates to a pipe coupling and to a method for inserting and releasably holding a pipe end in a pipe coupling.

When connecting a pipe to a pipe coupling, one of the most important objects is that of securely holding said pipe to the pipe coupling. Several types of pipe couplings with various technical solutions to this problem are known to the skilled person. One of the most popular solutions is that provided by split rings.

As split ring is understood a ring, usually made of metal or metal alloy, provided with an axial split so that it can be elastically opened or closed by spreading or narrowing said split.

US Patent 3,381,983 disclosed one such pipe coupling with a split ring. Both the pipe coupling and the pipe inserted into the coupling present circumferential grooves. Before the pipe is inserted, the split ring is installed into the circumferential groove on the pipe. As the pipe is inserted into the coupling, complementary tapers in the pipe coupling's opening and in the split ring cooperate to elastically contract the split ring. When the split ring reaches the circumferential groove in the internal surface of the coupling, it springs back into its relaxed state, locking the pipe in place. While effective, this pipe coupling is also complex and expensive to produce. It requires providing a circumferential groove on the pipe, which may be difficult to obtain on site. Moreover, a wrong manoeuvre can easily damage the split ring, the coupling or the pipe.

An example of a simpler pipe coupling with a split ring was disclosed in British Patent 930,890. This document disclosed a pipe coupling comprising a main body with an axial opening for receiving a pipe end, and a first and a second lateral openings; a split ring for releasably holding said pipe end within said axial opening; and a circumferential groove within said axial opening for receiving said split ring and holding it in an axial direction, wherein said first and second lateral openings are connected to said circumferential groove. Although this pipe coupling is comparatively less complex and should in principle be easier to produce, it is difficult to introduce into position a split ring with a high modulus of elasticity in the circumferential groove without straining it beyond the elastic limit. For this reason, the split ring will need to have a comparatively low modulus of elasticity, which will limit the maximum clamping force the split ring will be able to exert on the pipe end.

It is an object of the present invention to provide a pipe coupling of as simple manufacture as the abovementioned, yet will hold a pipe end with higher precision, strength and reliability.

For this purpose, a maximum distance between said first and second lateral openings is not smaller than an outer diameter of said split ring in an unstrained state, a minimum distance between said two lateral openings is not larger than a minimum width of the split in said split ring in an unstrained state, and at least one of said lateral openings has a width which is substantially larger than said minimum width of the split in said split ring in a unstrained state. By these features, it becomes possible to introduce said split ring into the circumferential groove without straining it, and so to easily use a high-modulus split ring, which will exert a strong clamping force on the pipe end.

The present invention also relates to a method for receiving a releasably holding a pipe end into said pipe coupling, comprising the steps of:
inserting said split ring, in an unstrained state, into said groove through said first or second lateral opening;
aligning said split in the split ring with one of said lateral openings which has a width substantially superior to said minimum width of the split in said split ring in an unstrained state;
spreading said split so as to open up an internal diameter of said split ring to at least, and preferably beyond an external diameter of the pipe end to be inserted into the pipe coupling;
inserting said pipe end into said axial opening of the main body beyond the split ring in the circumferential groove;
releasing said split, so as to close said split ring over said pipe end.

The split ring can therefore be placed without strain in the circumferential groove, and held open at least while the pipe end is inserted.

Preferably, the pipe coupling of the invention may further comprise a ring seal installed in said axial opening inwards of said circumferential groove and lateral openings, so as to ensure the leak-tightness of the pipe coupling. When inserting the pipe end, said pipe end will then be inserted beyond said ring seal.

Preferably, the pipe coupling of the invention may further comprise a flexible sealing sleeve, more preferably in an elastomeric material, for fitting around said main body over said lateral openings. After the split in the split ring is released to hold fast the pipe end, this flexible sealing sleeve may then be pulled over said lateral openings, so as to protect the split ring from aggressive environments, as well as further ensure the leak-tightness of the pipe coupling. More preferably, said main body may comprise a narrowing in order to hold said flexible sealing sleeve over said lateral openings.

Preferably, the pipe coupling of the invention may further comprise a spreader wedge, preferably in a synthetic material, for opening up said split ring, wherein a maximum width of said spreader wedge is not larger than the width of said at least one of the lateral openings which is substantially larger than said minimum width of the split in said split ring in an unstrained state. The split in the split ring may then be spread by partially pulling a spreader wedge, preferably in a synthetic material, through said split and the lateral opening with which it is aligned, preferably using a jack, held open by said spreader wedge while the pipe end is introduced, and released by pulling said spreader wedge completely out of said split.

More preferably, said spreader wedge comprises a narrow end segment, a wide end segment, and a middle segment, wherein said middle segment presents a wedge angle substantially lower than both the narrow and wide end segments, and most preferably substantially nil. In this manner, the introduction of the narrow end segment through the split will first spread the split apart, opening up the split ring. The ring will then be held open by the middle segment, with the wide end segment retaining the spreader wedge in place until it is pulled away. Even more preferably, said wide end segment may present a length not larger than a radial thickness of said split ring. The spreader wedge may then be pulled away with a sharp yank to close the ring around the pipe end in the pipe coupling.

A specific embodiment of the invention will now be described in an exemplary, but not restrictive manner, with reference to the following figures:
Fig. 1 shows a front view of a pipe coupling according to the invention;
Fig. 2 shows a transversal cut view of the pipe coupling of Fig. 1 along line II-II, as the split ring is being introduced;
Fig. 3 shows a transversal cut view of the pipe coupling of Fig. 1 along line II-II, with the split in the split ring aligned with one of the lateral openings;
Fig. 4 shows a transversal cut view of the pipe coupling of Fig. 1 along line II-II, with the spreader wedge being partially pulled through said split and lateral opening;
Fig. 5 shows a transversal cut view of the pipe coupling of Fig. 1 along line II-II, with the spreader wedge and split ring in position to receive a pipe end;
Fig. 6 shows a transversal cut view of the pipe coupling of Fig. 1 along line II-II, wherein the pipe end has been introduced, and the spreader wedge taken out;
Fig. 7 shows a detail longitudinal cut view of the pipe coupling of Fig. 6 along line VII-VII; and
Fig. 8 shows another front view of a pipe coupling according to the invention, wherein a flexible sealing sleeve has been pulled over the lateral openings.

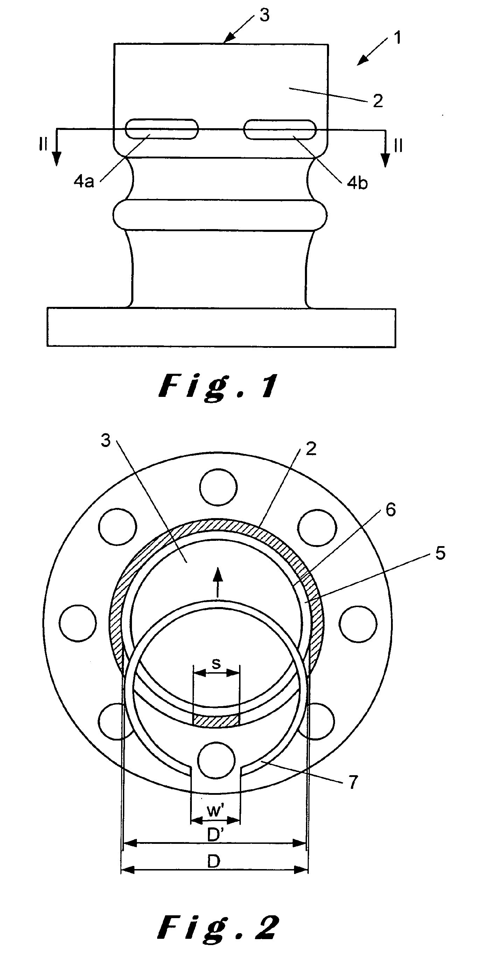

A pipe coupling 1 according to an embodiment of the invention is shown in Fig. 1. The main body 2 of this pipe coupling 1, made of cast iron, although it can alternatively be made in any other suitable material, in particular, but not necessarily, by casting, presents, besides an axial opening 3, two lateral openings 4a,4b. Turning now to Fig. 2, these two lateral openings 4a, 4b open to a circumferential groove 5 in the inner surface 6 of said main body 2 around the axial opening 3. This circumferential groove 5 is shaped so as to receive a split ring 7, in, for instance, high tensile steel. As seen also in Fig. 2, the longest distance D between the two lateral openings 4a, 4b is longer that the outer diameter D' of the split ring 7 in an unstrained state. The shortest distance s between the two lateral openings 4a, 4b is, in turn, shorter than the width w' of the split 8 in the split ring 7 in an unstrained state, so that the split ring 7 can easily be introduced without strain through one of the lateral openings 4a,4b into the circumferential groove 5, as also illustrated in Fig. 2.

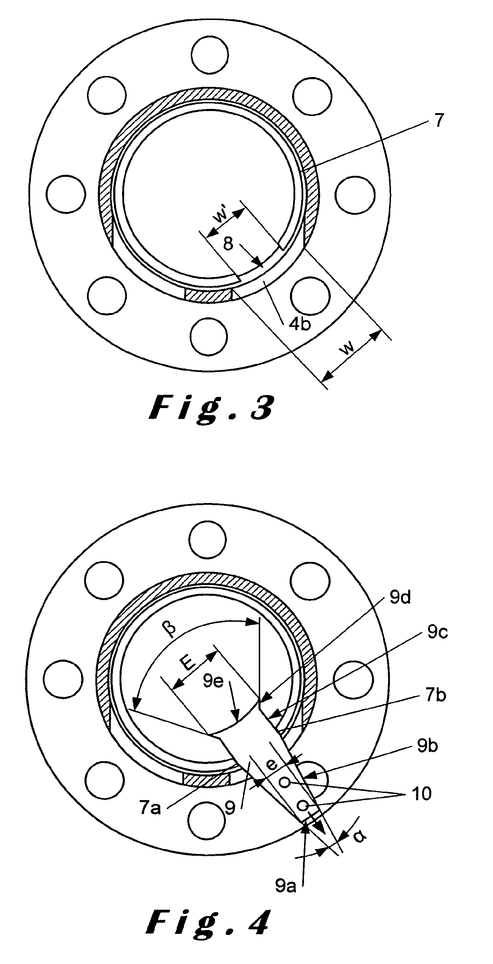

Once the split ring 7 is placed into the circumferential groove 5, it is turned so as to align its split 8 with the lateral opening 4b, as shown in Fig. 3. The width w of this lateral opening 4b is substantially larger than the width w' of the split 8 in an unstrained state of the split ring 7. To spread said split 8 open, a spreader wedge 9 can thus be introduced, through the axial opening 3, into the split 8. For ease of production, the spreader wedge 9 may be made of a synthetic material, although it could be made of any other suitable material. The spreader wedge 9 has a narrow end 9a, a wide end 9e, and, in between, a narrow end segment 9b wherein the two sides of the wedge 9 are set at a first wedge angle α>0°, a middle segment 9c, wherein the two sides are substantially parallel, and a short wide end segment 9d, of a length I shorter than the radial thickness t of the split ring 7, wherein the two sides of the wedge 9 are set at a second wedge angle β>0°. At its narrow end 9a, the spreader wedge 9 has a width e smaller than the width w' of the split 8 in the split ring 7 in an unstrained state, whereas, at its wide end 9e, it has a width E that is substantially larger than w', but smaller than the width w of the lateral opening 4b, so that it can go completely through said lateral opening 4b.

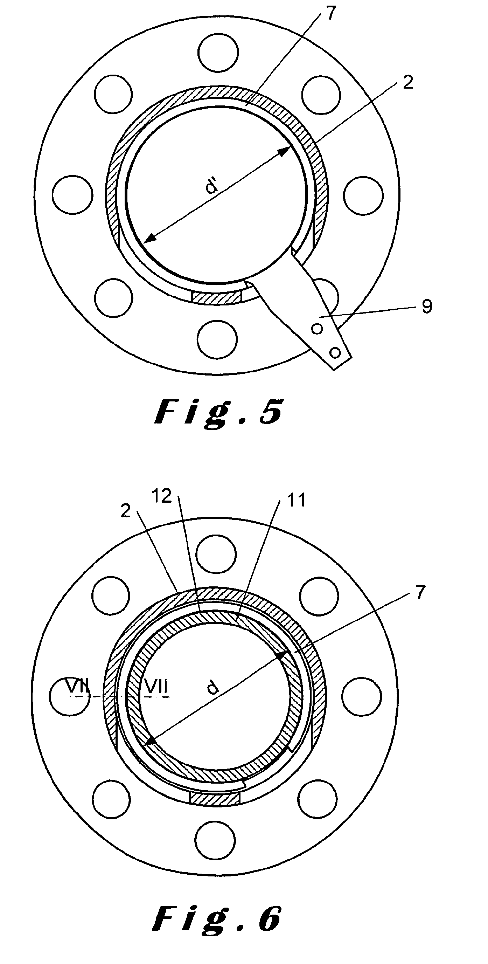

As illustrated in Fig. 4, to spread the two ends 7a,7b of the split ring 7 apart, so as to spread the split 8 open and open up the inner diameter d of the split ring 7, the narrow end segment 9b of the spreader wedge 9 is driven through the split 8. For this purpose, the spreader wedge 9 may also comprise at least one attachment point 10 for a mechanic, electric, hydraulic or pneumatic jack to pull the spreader wedge 9 through the split 8 and the lateral opening 4b in the main body 2 of the pipe coupling 1, until the two ends 7a,7b of the split ring 7 rest against the side surfaces of the middle segment 9c of the spreader wedge 9, and the spreader wedge 9 is only held by its wide end segment 9d, as shown in Fig. 5. In this position, the inner diameter d' of the split ring 7 has opened up beyond the outer diameter d of a pipe end 11 to be introduced in the pipe coupling 1.

Once said pipe end 11 is inserted, through the axial opening 3, in said main body 2 of the pipe coupling 1, the spreader wedge 9 can be yanked out of the split 8, so that the split ring 7 will spring back to a smaller diameter, and clamp onto outer surface 12 of the pipe end 11, so as to firmly hold it into position, as seen in Fig. 6.

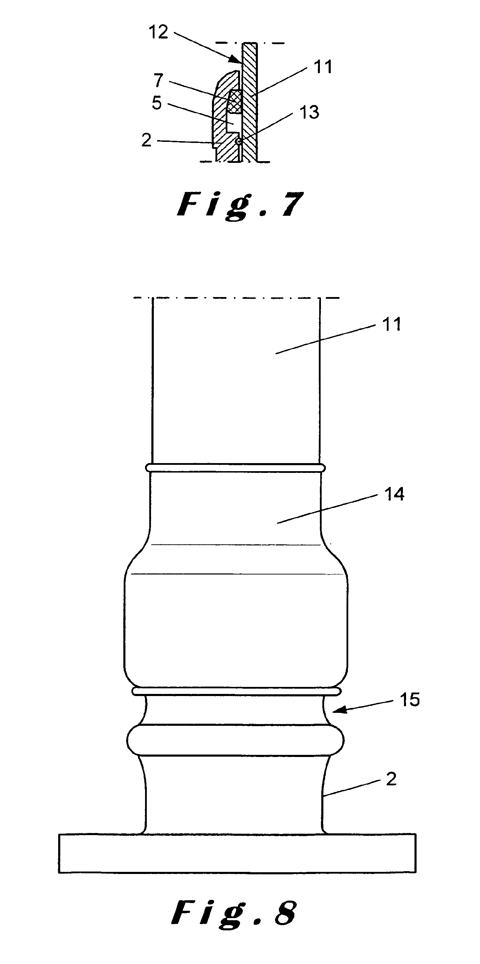

Ideally, the inner surface 6 of the main body 2 also comprises a ring seal 13 inwards of the circumferential groove 5. When the pipe end 11 is inserted, through the axial opening 3, in said main body 2 of the pipe coupling 1, it is inserted beyond said ring seal 13, so that, as illustrated in Fig. 7, it provides a fluid seal against the outer surface 12 of the pipe end 11.

Once the pipe end 11 is firmly held in the pipe coupling 1, its leak-tightness can be further improved, and the split ring 7 protected against an aggressive environment, as well as dust and grit entering through the lateral openings 4a, 4b, by pulling a flexible sealing sleeve 14 over those lateral openings 4a, 4b, as shown in Fig. 8. A narrowing 15 beyond those lateral openings 4a, 4b helps maintain the flexible sealing sleeve 14 in place.

To release again the pipe end 12, the flexible sealing sleeve 14 may be pulled away from those lateral openings 4a, 4b, so that the split 8 becomes accessible again, through the lateral opening 4b, to a conventional spreader, as was disclosed, for instance in Canadian patent application CA 2 340 890, to open up again the split ring 7 and release its grip on the pipe end 11.

Although the present invention has been described with reference to specific exemplary embodiments, it will be evident that various modifications and changes may be made to these embodiments without departing from the broader scope of the invention as set forth in the claims. For instance, although the main body in the disclosed embodiment is in cast iron, it could also be produced by another suitable production method, such as, for instance, injection or extrusion, in any other suitable material, such as another metal or metal alloy, or a synthetic material. Accordingly, the description and drawings are to be regarded in an illustrative sense rather than a restrictive sense.

## Claims

1. Pipe coupling (1) comprising:
a main body (2), preferably in a cast material, with an axial opening (3) for receiving a pipe end (11), and a first and a second lateral openings (4a,4b);
a split ring (7) for releasably holding said pipe end (11) within said axial opening (3);
a circumferential groove (5) within said axial opening (3) for receiving said split ring (7) and holding it in an axial direction, wherein said first and
second lateral openings (4a,4b) are connected to said circumferential groove (5);
and **characterised in that** a maximum distance (D) between said first and second lateral openings (4a,4b) is not shorter than an outer diameter (D') of said split ring (7) in an unstrained state, a minimum distance (s) between said two lateral openings (4a,4b) is not longer than a minimum width (w') of a split (8) in said split ring (7) in an unstrained state, and at least one of said lateral openings (4a,4b) has a width (w) which is substantially larger than said minimum width (w') of the split (8) in said split ring (7) in an unstrained state.

2. Pipe coupling (1) according to claim 1, further comprising a ring seal (13) installed in said axial opening (3) inwards of said circumferential groove (5) and lateral openings (4a,4b).

3. Pipe coupling (1) according to any one of the previous claims, further comprising a flexible sealing sleeve (14), preferably in an elastomeric material, for fitting around said main body (2) over said lateral openings (4a,4b).

4. Pipe coupling (1) according to claim 3, wherein, behind said lateral openings (4a,4b), said main body (2) comprises a narrowing (15) in order to hold said flexible sealing sleeve (14) over said lateral openings (4a,4b).

5. Pipe coupling (1) according to any one of the previous claims, further comprising a spreader wedge (9), preferably in a synthetic material, for opening up said split ring (7), wherein a maximum width (E) of said spreader wedge (9) is not larger than the width (w) of said at least one of the lateral openings (4a,4b) which is substantially larger than said minimum width (w') of the split (8) in said split ring (7) in an unstrained state.

6. Pipe coupling (1) according to claim 5, wherein said spreader wedge (9) comprises a narrow end segment (9b), a wide end segment (9d), and a middle segment (9c), wherein said middle segment (9c) presents a wedge angle substantially lower than those (α,β) at, respectively, the narrow and wide end segments (9b,9d), and preferably substantially nil.

7. Pipe coupling (1) according to claim 6, wherein said wide end segment (9d) presents a length (I) not larger than a radial thickness (t) of said split ring (7).

8. Pipe coupling (1) according to any one of claims 5 to 7, further comprising a jack for pulling said spreader wedge (9) through said split (8) to spread said split (8) open.

9. A method for receiving and releasably holding a pipe end (11) in a pipe coupling (1) according to claim 1, comprising the following steps:
inserting said split ring (7), in an unstrained state, into said circumferential groove (5) through said first or second lateral opening (4a,4b);
aligning said split (8) in the split ring (7) with one of said lateral openings (4a,4b) which has a width (w) substantially superior to said minimum width (w') of the split (8) in said split ring (7) in an unstrained state;
spreading said split (8) open so as to open up an internal diameter (d') of said split ring (7) to at least an external diameter (d) of the pipe end (11) to be inserted into the pipe coupling (1);
inserting said pipe end (11) into said axial opening (3) of the main body (2) beyond the split ring (7) in the circumferential groove (5);
releasing said split (8), so as to close said split ring (7) over said pipe end (11).

10. A method according to claim 9, wherein said pipe coupling (1) further comprises a ring seal (13) installed in said axial opening (13) inwards of said circumferential groove (5) and lateral openings (4a,4b), and said pipe end (11) is inserted beyond said ring seal (13).

11. A method according to any one of claims 9 or 10, wherein a flexible sealing sleeve (14), preferably in an elastomeric material, is pulled over said lateral openings (4a,4b) after the split (8) is released.

12. A method according to any one of claims 9 to 11, wherein said split (8) is spread by partially pulling a spreader wedge (9), preferably in a synthetic material, through said split (8) and the lateral opening (4a,4b) with which it is aligned, preferably using a jack, held open by said spreader wedge (9) while the pipe end (11) is introduced, and released by pulling said spreader wedge (9) completely out of said split (8).

## Patentansprüche

1. Rohrkupplung (1), mit:
einem Hauptkörper (2), vorzugsweise aus Gussmaterial, mit einer axialen Öffnung (3) zur Aufnahme eines Rohrendes (11), und einer ersten und einer zweiten seitlichen Öffnung (4a, 4b);
einem Spaltring (7), um das Rohrende (11) in der axialen Öffnung (3) lösbar zu halten;
einer Umfangsnut (5), die in der axialen Öffnung (3) angeordnet ist, um den Spaltring (7) aufzunehmen und diesen in einer axialen Richtung zu halten, wobei die erste und die zweite seitliche Öffnung (4a, 4b) mit der Umfangsnut (5) verbunden sind;
und **dadurch gekennzeichnet, dass** ein maximaler Abstand (D) zwischen der ersten und der zweiten seitlichen Öffnung (4a, 4b) nicht kürzer als ein Außendurchmesser (D') des Spaltrings (7) in einem nicht beanspruchten Zustand ist, dass ein Mindestabstand (s) zwischen den beiden seitlichen Öffnungen (4a, 4b) nicht größer als eine Mindestbreite (w') eines Spalts (8) im Spaltring (7) in einem nicht beanspruchten Zustand ist, und dass zumindest eine der seitlichen Öffnungen (4a, 4b) eine Breite (w) aufweist, die wesentlich größer als die Mindestbreite (w') des Spalts (8) im Spaltring (7) in einem nicht beanspruchten Zustand ist.

2. Rohrkupplung (1) nach Anspruch 1, weiters mit einer Ringdichtung (13), die in der axialen Öffnung (3) einwärts der Umfangsnut (5) und der seitlichen Öffnungen (4a, 4b) eingerichtet ist.

3. Rohrkupplung (1) nach einem der vorherigen Ansprüche, weiters mit einer flexiblen Dichtungsmanschette (14), vorzugsweise aus elastomerem Material, zur Passung um den Hauptkörper (2) über die seitlichen Öffnungen (4a, 4b).

4. Rohrkupplung (1) nach Anspruch 3, wobei der Hauptkörper (2) hinter den seitlichen Öffnungen (4a, 4b) eine Verengung (15) aufweist, um die flexible Dichtungsmanschette (14) über den seitlichen Öffnungen (4a, 4b) zu halten.

5. Rohrkupplung (1) nach einem der vorherigen Ansprüche, weiters mit einem Spreizkeil (9), vorzugsweise aus synthetischem Material, zum Öffnen des Spaltrings (7), wobei eine maximale Breite (E) des Spreizkeils (9) nicht größer als die Breite (w) der zumindest einen der seitlichen Öffnungen (4a, 4b) ist, die wesentlich größer als die Mindestbreite (w') des Spalts (8) im Spaltring (7) in einem nicht beanspruchten Zustand ist.

6. Rohrkupplung (1) nach Anspruch 5, wobei der Spreizkeil (9) ein Segment (9b) mit einem schmalen Ende, ein Segment (9d) mit einem breiten Ende und ein Mittelsegment (9c) hat, wobei das Mittelsegment (9c) einen Keilwinkel aufweist, der wesentlich niedriger als jene (α, β) an den Segmenten (9b, 9d) mit einem schmalen bzw. breiten Enden und vorzugsweise im Wesentlichen Null ist.

7. Rohrkupplung (1) nach Anspruch 6, wobei das Segment (9d) mit einem breiten Ende eine Länge (I) aufweist, die nicht größer als eine radiale Dicke (t) des Spaltrings (7) ist.

8. Rohrkupplung (1) nach einem der Ansprüche 5 bis 7, weiters mit einer Klinke, um den Spreizkeil (9) durch den Spalt (8) zu ziehen, so dass der Spalt (8) aufgespreizt wird.

9. Verfahren zum Aufnehmen und lösbaren Halten eines Rohrendes (11) in einer Rohrkupplung (1) nach Anspruch 1, welches die folgenden Schritte umfasst:
Einsetzen des Spaltrings (7) in einem nicht beanspruchten Zustand durch die erste oder zweite seitliche Öffnung (4a, 4b) in die Umfangsnut (5);
Ausrichten des Spalts (8) im Spaltring (7) mit einer der seitlichen Öffnungen (4a, 4b), wobei deren Breite (w) wesentlich größer als die Mindestbreite (w') des Spalts (8) im Spaltring (7) in einem nicht beanspruchten Zustand ist;
Aufspreizen des Spalts (8), um einen Innendurchmesser (d') des Spaltrings (7) auf zumindest einen Außendurchmesser (d) des Rohrendes (11), das in die Rohrkupplung (1) eingesetzt werden soll, zu öffnen;
Einsetzen des Rohrendes (11) in die axiale Öffnung (3) des Hauptkörpers (2) hinter den Spaltring (7) in der Umfangsnut (5);
Freigeben des Spalts (8), so dass der Spaltring (7) über dem Rohrende (11) geschlossen wird.

10. Verfahren nach Anspruch 9, wobei die Rohrkupplung (1) weiters eine Ringdichtung (13) aufweist, die in der axialen Öffnung (3) einwärts der Umfangsnut (5) und der seitlichen Öffnungen (4a, 4b) eingerichtet ist, und wobei das Rohrende (11) hinter die Ringdichtung (13) eingesetzt wird.

11. Verfahren nach einem der Ansprüche 9 oder 10, wobei eine flexible Dichtungsmanschette (14), vorzugsweise aus elastomerem Material, nach Freigabe des Spalts (8) über die seitlichen Öffnungen (4a, 4b) gezogen wird.

12. Verfahren nach einem der Ansprüche 9 bis 11, wobei der Spalt (8) durch teilweises Ziehen eines Spreizkeils (9), vorzugsweise aus synthetischem Material, durch den Spalt (8) und die seitliche Öffnung (4a, 4b), mit der dieser ausgerichtet ist, vorzugsweise unter Verwendung einer Klinke aufgespreizt wird, durch den Spreizkeil (9) offen gehalten wird, während das Rohrende (11) eingeführt wird, und durch Ziehen des Spreizkeils (9) zur Gänze aus dem Spalt (8) freigegeben wird.

## Revendications

1. Accouplement de tuyaux (1) comprenant :
un corps principal (2), de préférence dans un matériau coulé, pourvu d'une ouverture axiale (3) pour recevoir une extrémité de tuyau (11), et une première et une deuxième ouverture axiale (4a, 4b) ;
une bague fendue (7) pour maintenir de manière amovible ladite extrémité de tuyau (11) à l'intérieur de ladite ouverture axiale (3) ;
une gorge circonférentielle (5) à l'intérieur de ladite ouverture axiale (3) pour recevoir ladite bague fendue (7) et la maintenir dans une direction axiale, dans lequel lesdites première et deuxième ouvertures latérales (4a, 4b) sont reliées à ladite gorge circonférentielle (5) ;
et **caractérisé en ce qu'**une distance maximale (D) entre lesdites première et deuxième ouvertures latérales (4a, 4b) n'est pas plus courte qu'un diamètre extérieur (D') de ladite bague fendue (7) dans un état non sollicité, une distance minimale (s) entre lesdites ouvertures latérales (4a, 4b) n'est pas plus longue qu'une largeur minimale (w') d'une fente (8) dans ladite bague fendue (7) dans un état non sollicité, et au moins une desdites ouvertures latérales (4a, 4b) a une largeur (w) qui est sensiblement plus grande que ladite largeur minimale (w') de la fente (8) dans ladite bague fendue (7) dans un état non sollicité.

2. Accouplement de tuyaux (1) selon la revendication 1, comprenant en outre un joint d'étanchéité annulaire (13) installé dans ladite ouverture axiale (3) en direction de l'intérieur par rapport à ladite gorge circonférentielle (5) et auxdites ouvertures latérales (4a, 4b).

3. Accouplement de tuyaux (1) selon l'une quelconque des revendications précédentes, comprenant en outre un manchon d'étanchéité flexible (14), de préférence en matériau élastomère, à adapter autour dudit corps principal (2) au-dessus desdites ouvertures latérales (4a, 4b).

4. Accouplement de tuyaux (1) selon la revendication 3, dans lequel derrière lesdites ouvertures latérales (4a, 4b), ledit corps principal (2) comprend un rétrécissement (15) afin de maintenir ledit manchon d'étanchéité flexible (14) sur lesdites ouvertures latérales (4a, 4b).

5. Accouplement de tuyaux (1) selon l'une quelconque des revendications précédentes, comprenant en outre un coin écarteur (9), de préférence en matière plastique, pour ouvrir ladite bague fendue (7), dans lequel une largeur maximale (E) dudit coin écarteur (9) n'est pas plus grande que la largeur (w) de ladite au moins une des ouvertures latérales (4a, 4b) qui est sensiblement plus grande que ladite largeur minimale (w') de la fente (8) dans ladite bague fendue (7) dans un état non sollicité.

6. Accouplement de tuyaux (1) selon la revendication 5, dans lequel ledit coin écarteur (9) comprend un étroit segment terminal (9b), un large segment terminal (9d) et un segment central (9c), ledit segment central (9c) présentant un angle de coin sensiblement moindre que ceux (α, β) au niveau respectivement des étroit et large segments terminaux (9b, 9d), et de préférence sensiblement nul.

7. Accouplement de tuyaux (1) selon la revendication 6, dans lequel ledit large segment terminal (9d) présente une longueur (I) qui n'est pas plus grande qu'une épaisseur radiale (t) de ladite bague fendue (7).

8. Accouplement de tuyaux (1) selon l'une quelconque des revendications 5 à 7, comprenant en outre un vérin pour tirer ledit coin écarteur (9) à travers la fente (8) pour ouvrir largement ladite fente (8).

9. Procédé destiné à recevoir et à maintenir de manière amovible une extrémité de tuyau (11) dans un accouplement de tuyau (1) selon la revendication 1, comprenant les étapes suivantes :
insérer ladite bague fendue (7), dans un état non sollicité, dans ladite gorge circonférentielle (5) par ladite première ou deuxième ouverture latérale (4a, 4b) ;
aligner ladite fente (8) dans la bague fendue (7) sur une desdites ouvertures latérales (4a, 4b) qui a une largeur (w) sensiblement supérieure à ladite largeur minimale (w') de la fente (8) dans ladite bague fendue (7) dans un état non sollicité ;
ouvrir largement ladite fente (8) de manière à agrandir un diamètre intérieur (d') de ladite bague fendue (7) à au moins un diamètre extérieur (d) de l'extrémité de tuyau (11) à insérer dans l'accouplement de tuyau (1);
insérer ladite extrémité de tuyau (11) dans ladite ouverture axiale (3) du corps principal (2) au-delà de la bague fendue (7) dans la gorge circonférentielle (5) ;
relâcher ladite fente (8) de manière à fermer ladite bague fendue (7) sur ladite extrémité de tuyau (11).

10. Procédé selon la revendication 9, dans lequel ledit accouplement de tuyau (1) comprend en outre un joint d'étanchéité annulaire (13) installé dans ladite ouverture axiale (13) en direction de l'intérieur par rapport à la gorge (5) et aux ouvertures latérales (4a, 4b), et ladite extrémité de tuyau (11) est insérée au-delà dudit joint d'étanchéité annulaire (13).

11. Procédé selon l'une quelconque des revendications 9 ou 10, dans lequel un manchon d'étanchéité flexible (14), de préférence en matériau élastomère, est tiré au-dessus desdites ouvertures latérales (4a, 4b) après la fente (8) a été relâchée.

12. Procédé selon l'une quelconque des revendications 9 à 11, dans lequel ladite fente (8) est élargie en tirant en partie un coin écarteur (9), de préférence en matière plastique, à travers ladite fente (8) et l'ouverture latérale (4a, 4b) sur laquelle elle est alignée, de préférence en utilisant un vérin, est maintenue ouverte par ledit coin écarteur (9) pendant l'introduction de l'extrémité de tuyau (11) et est relâchée en retirant complètement ledit coin écarteur (9) de ladite fente (8).
